(19) Europäisches Patentamt
European Patent Office
Office européen des brevets

(11) **EP 3 636 623 A1**

(12) **EUROPÄISCHE PATENTANMELDUNG**

(43) Veröffentlichungstag:
**15.04.2020   Patentblatt 2020/16**

(51) Int Cl.:
***C04B 40/00*** *(2006.01)*        ***C01F 7/74*** *(2006.01)*
***C04B 103/12*** *(2006.01)*

(21) Anmeldenummer: **19206783.3**

(22) Anmeldetag: **19.12.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2013   EP 13199157**

(62) Dokumentnummer(n) der früheren Anmeldung(en) nach Art. 76 EPÜ:
**14815757.1 / 3 083 525**

(71) Anmelder: **SIKA TECHNOLOGY AG**
**6340 Baar (CH)**

(72) Erfinder:
• **Weibel, Martin**
  **8048 Zürich (CH)**

• **Lindlar, Benedikt**
  **78467 Konstanz (DE)**
• **Stenger, Christian**
  **5024 Küttigen (CH)**

(74) Vertreter: **Sika Patent Attorneys**
**c/o Sika Technology AG**
**Corp. IP Dept.**
**Tüffenwies 16**
**Postfach**
**8048 Zürich (CH)**

Bemerkungen:
Diese Anmeldung ist am 01-11-2019 als Teilanmeldung zu der unter INID-Code 62 erwähnten Anmeldung eingereicht worden.

(54) **VERFAHREN ZUR HERSTELLUNG EINES SPRITZBETONBESCHLEUNIGERS MIT NEUEN ROHSTOFFEN**

(57)    Es wird ein Verfahren zur Herstellung eines Spritzbetonbeschleunigers aus einer Mischung a), b) oder c) beschrieben, welches umfasst das Mischen von

a) mindestens einer Aluminiumverbindung ausgewählt aus einem Aluminiumsulfat und/oder einem Aluminiumhydroxysulfat, mindestens einer Calciumverbindung und gegebenenfalls Wasser oder

b) mindestens einer Aluminiumverbindung ausgewählt aus Aluminiumsulfat und/oder Aluminiumhydroxysulfat, mindestens einem Alkalialuminat und gegebenenfalls Wasser, wobei der Alkaligehalt der Mischung nicht mehr als 10 Massen-% $Na_2O$-Äquivalent, bevorzugt nicht mehr als 5 Massen-% $Na_2O$-Äquivalent, bevorzugt nicht mehr als 2 Massen-% $Na_2O$-Äquivalent, beträgt, oder

c) konzentrierter Schwefelsäure und Aluminiumhydroxid, bevorzugt kristallinem Aluminiumhydroxid, wobei die Schwefelsäure im stöchiometrischen Unterschuss vorliegt und die Mischung bei einer Temperatur von über 100 °C umgesetzt wird, bevorzugt unter Überdruck,

wobei der Spritzbetonbeschleuniger oder, sofern es sich um einen festen Spritzbetonbeschleuniger handelt, eine Mischung des festen Spritzbetonbeschleunigers in Wasser einen pH-Wert von unter 4 aufweist.

Die Mischungen a), b) und c) eignen sich als Beschleuniger für Zementsuspensionen, Spritzbeton oder Spritzmörtel.

EP 3 636 623 A1

**Beschreibung**

**Technisches Gebiet**

Die Erfindung betrifft ein Verfahren zur Herstellung eines Spritzbetonbeschleunigers mit neuen Rohstoffen, den daraus erhältlichen Spritzbetonbeschleuniger und dessen Verwendung.

**Stand der Technik**

Es ist dem Fachmann gut bekannt, dass das Abbinden und Erhärten eines hydraulischen Bindemittels oder einer Mischung, welche ein hydraulisches Bindemittel enthält, durch die Zugabe eines Beschleunigers beschleunigt werden kann. Typische Beispiele für hydraulische Bindemittel sind Zement, wie Portlandzement, Portlandmischzemente, Kalk, gelöschte Kalke und Mischungen derselben, und typische Beispiele von Mischungen, welche ein solches hydraulisches Bindemittel und weitere Komponenten enthalten, sind Mörtel und Beton.

Spritzbeton oder -mörtel ist Beton oder Mörtel, der in einer geschlossenen Schlauch- oder Rohrleitung zur Einbaustelle gefördert und dort durch Spritzen aufgetragen und dabei verdichtet wird. Ein Spritzbeton oder Spritzmörtel muss schnell abbinden und erhärten, damit in der gespritzten Mischung sehr schnell eine ausreichende Festigkeit entwickelt wird, um sicherzustellen, dass die gespritzte Schicht richtig an der Oberfläche haftet, auf welche der Spritzbeton oder -mörtel aufgebracht wurde. Daher sind Beschleuniger für Spritzbeton und Spritzmörtel von besonderer Bedeutung.

Natriumaluminat ist ein großtechnisches Standardprodukt und wird als Beschleuniger für hydraulische Bindemittel verwendet. Üblicherweise sind größere Menge an Natriumaluminat erforderlich, was den Alkaligehalt des Betons deutlich erhöhen kann. In vielen Teilen der Welt ist dies nicht erwünscht, oder die zulässigen Höchstmengen sind gesetzlich beschränkt. Teilweise ist die Verwendung von alkalialuminatbasierten Beschleunigern wegen ihrem hohen pH-Wert (> 12) und somit wegen ihrem Gefährdungspotential für Augen, Haut und Lunge nicht mehr erlaubt.

Mischungen auf Basis von Aluminiumsulfat werden häufig als Beschleuniger eingesetzt, da sie das beste Preis-Leistungsverhältnis aufweisen. Sie sind aber in den ersten Minuten des Abbindens häufig zu langsam. Dieser Nachteil kann überwunden werden, indem man in der Mischung den Aluminiumgehalt erhöht bzw. das molare Verhältnis von Aluminium zu Sulfat auf größer als 2/3 ($\approx$0,66) einstellt. In Aluminiumsulfat mit der Formel $Al_2(SO_4)_3$ ist das stöchiometrische molare Verhältnis von Al zu Sulfat 2 zu 3. Aluminiumsulfat kann durch Umsetzung von Aluminiumhydroxid und Schwefelsäure hergestellt werden.

Chemisch gesehen enthalten als Beschleuniger verwendete Mischungen mit einem molaren Verhältnis von Al / Sulfat von größer als 2/3 Aluminiumhydroxysulfat, das auch als basisches Aluminiumsulfat bezeichnet wird. Wässrige kommerzielle Mischungen mit einem molaren Verhältnis von Al zu Sulfat im Bereich von etwa 0,66 bis etwa 1 liegen gewöhnlich als Suspension, solche mit einem Verhältnis von größer 1 gewöhnlich als Lösung vor.

Zur Erhöhung des Aluminiumgehaltes in Aluminiumsulfat enthaltenden Mischungen haben sich als sulfatfreie oder sulfatarme Aluminiumquelle amorphe Aluminiumhydroxide, Aluminiumhydroxysulfate, Aluminiumhydroxycarbonate oder Aluminiumnitrat praktisch bewährt und können als Pulver oder Suspension zugesetzt werden. Kommerzielles amorphes Aluminiumhydroxysulfat weist gewöhnlich ein Verhältnis von $Al:SO_4$ von größer 1 oder sehr viel größer 1 auf und ist teuer. Andere bekannte Aluminiumquellen sind noch teurer, zu wenig reaktiv oder enthalten störende Komponenten.

**Darstellung der Erfindung**

Die Aufgabe der vorliegenden Erfindung bestand daher darin, die vorstehend erwähnten Probleme nach dem Stand der Technik zu überwinden. Insbesondere bestand die Aufgabe in der Bereitstellung eines Verfahrens für die Herstellung von für Spritzbeton oder Spritzmörtel geeigneten, vorzugsweise basisches Aluminiumsulfat enthaltenden Beschleunigern, das verglichen mit dem Stand der Technik eine kostengünstigere Herstellung ermöglicht.

Dies konnte überraschenderweise durch Verwendung relativ preisgünstigere Rohstoffe zur Herstellung des Beschleunigers erreicht werden. Hierfür wurde entweder der Aluminumgehalt von Aluminiumsulfat und/oder Aluminiumhydroxysulfat enthaltenden Mischungen durch Zugabe von Alkalialuminat erhöht oder der für eine schnelle Reaktion zugängliche Sulfatgehalt in Aluminiumsulfat und/oder ein Aluminiumhydroxysulfat enthaltenden Mischungen durch Zugabe von einer Calciumverbindung verringert.

Der für eine schnelle Reaktion zugängliche Sulfatgehalt ist von Bedeutung, da das Abbinden von Zement oder einem anderen hydraulischen Bindemittel beim Spritzen nur wenige Minuten dauert. Durch die bei der Zugabe der Calciumverbindung erfolgte Ausfällung von Gips wird dem Beschleuniger freies Sulfat entzogen. Dieses als Calciumsulfat gebundene Sulfat wird der unmittelbaren Abbindereaktion entzogen, was erwünscht ist, und erst verzögert nach Stunden, d.h. während der Erhärtung, durch Wiederauflösen des Gipses kontrolliert wieder freigesetzt. Auch dies ist in der Regel erwünscht. Ohne sich an eine Theorie binden zu wollen, wird vermutet, dass das dabei frei werdende Calcium die Erhärtung beschleunigt.

In einer alternativen Ausführungsform wurde Aluminumsulfat mit erhöhtem Aluminiumgehalt direkt durch Umsetzung von Aluminiumhydroxid, bevorzugt billigem, kristallinem Aluminiumhydroxid, mit unterstöchiometrischen Mengen Schwefelsäure erhalten.

Die Erfindung betrifft daher Verfahren zur Herstellung eines Spritzbetonbeschleunigers aus einer Mischung a), b) oder c), umfassend das Mischen von

a) mindestens einer Aluminiumverbindung ausgewählt aus einem Aluminiumsulfat und/oder einem Aluminiumhydroxysulfat, mindestens einer Calciumverbindung und gegebenenfalls Wasser oder

b) mindestens einer Aluminiumverbindung ausgewählt aus einem Aluminiumsulfat und/oder einem Aluminiumhydroxysulfat, mindestens einem Alkalialuminat und gegebenenfalls Wasser, wobei der Alkaligehalt der Mischung nicht mehr als 10 Massen-% $Na_2O$-Äquivalent, bevorzugt nicht mehr als 5 Massen-% $Na_2O$-Äquivalent, bevorzugter nicht mehr als 2 Massen-% $Na_2O$-Äquivalent, besonders bevorzugt nicht mehr als 1 Massen-% $Na_2O$-Äquivalent, beträgt, oder

c) konzentrierter Schwefelsäure und Aluminiumhydroxid, bevorzugt kristallinem Aluminiumhydroxid, wobei die Schwefelsäure im stöchiometrischen Unterschuss vorliegt und die Mischung, bei einer Temperatur von über 100 °C umgesetzt wird, bevorzugt unter Überdruck, d.h. einem Druck größer 1 bar,

wobei der Spritzbetonbeschleuniger oder, sofern es sich um einen festen Spritzbetonbeschleuniger handelt, eine Mischung des festen Spritzbetonbeschleunigers in Wasser einen pH-Wert von bevorzugt unter 4 aufweist.

Durch die Verwendung der preiswerten Rohstoffe können Mischungen auf Basis von Aluminiumsulfaten und/oder Aluminiumhydroxysulfaten mit einem erhöhten molaren Verhältnis von Aluminium zu Sulfat zu geringeren Kosten als bisher hergestellt werden, wobei für dieses molare Verhältnis nur leicht zugängliches Aluminium und Sulfat berücksichtigt werden, d.h. als ein $CaSO_4$ gebundenes Sulfat wird nicht berücksichtigt. Es gibt von $CaSO_4$ verschiedene Hydrate, in der Regel fällt es in Form des Dihydrats aus. Diese Mischungen eignen sich als Spritzbetonbeschleuniger.

Durch die Verwendung der erfindungsgemäßen Mischungen als Spritzbetonbeschleuniger kann eine verbesserte Festigkeitsentwicklung des Spritzbetons erreicht werden. Desweiteren weist der Spritzbetonbeschleuniger eine verringerte Viskosität auf. Es wurde überraschenderweise festgestellt, dass die Zugabe der Calciumverbindung in der Mischung a) auch zu einer verbesserten Lagerstabilität des Spritzbetonbeschleunigers führt.

Bevorzugte Ausführungsformen des Verfahrens sind in den abhängigen Ansprüchen wiedergegeben. Die Erfindung betrifft auch den aus dem Verfahren erhältlichen Spritzbetonbeschleuniger sowie dessen Verwendung als Spritzbetonbeschleuniger. Im Folgenden wird die Erfindung im Einzelnen erläutert.

## Weg zur Ausführung der Erfindung

Beschleuniger sind Substanzen oder Mischungen, die das Abbinden und/oder Erhärten eines hydraulischen Bindemittels oder einer Mischung, welche ein hydraulisches Bindemittel enthält, beschleunigen. Typische Beispiele für hydraulische Bindemittel sind Zement, Kalk, gelöschte Kalke und Mischungen derselben, und typische Beispiele von Mischungen, welche ein solches Bindemittel und weitere Komponenten enthalten, sind Zementsuspensionen, z.B. für Injektionen, Mörtel und Beton. Bevorzugt handelt es sich um eine Zementsuspension, einen Beton oder Mörtel, der Zement, insbesondere Portlandzement und/oder Portlandmischzemente, enthält. Hydraulische Bindemittel, insbesondere Zemente, enthalten meist Calciumsulfat in Form von Gips, Hemihydrat und/oder Anhydrit als Abbinderegler bzw. Sulfatträger.

Spritzbeton wird allgemein als Oberbegriff für Spritzbeton und Spritzmörtel verwendet. Beschleuniger für Spritzbeton oder Spritzmörtel werden allgemein als Spritzbetonbeschleuniger bezeichnet. Sofern nicht ausdrücklich anders angegeben, schließt dementsprechend in der vorliegenden Anmeldung einschließlich der Ansprüche der Ausdruck Spritzbeton immer auch Spritzmörtel mit ein. Entsprechend umfasst der Ausdruck Spritzbetonbeschleuniger in der vorliegenden Anmeldung und in den beigefügten Ansprüchen Beschleuniger für Spritzbeton und Beschleuniger für Spritzmörtel sowie Beschleuniger für zementöse Injektionen.

Spritzbeton ist ein Beton oder Mörtel, der in einer geschlossenen Schlauch- oder Rohrleitung zur Einbaustelle gefördert und dort durch Spritzen aufgetragen und dabei verdichtet wird. Grundsätzlich werden zwei Spritzverfahren unterschieden, das Trocken- und das Nassspritzverfahren. Beim Trockenspritzverfahren wird ein erdfeuchter oder trockener Beton oder Mörtel der Förderleitung zugeführt und in der Regel mit Druckluft zur Spritzdüse gefördert. Dort werden Zugabewasser und gegebenenfalls Betonzusatzmittel wie z.B. Spritzbetonbeschleuniger oder Rückprallminderer zugegeben. Beim Nassspritzverfahren wird eine nasse Grundmischung aus einem Beton oder Mörtel über die Förderleitung zur Düse gefördert und in der Regel mittels Druckluft oder Treibluft gespritzt. Im Düsenbereich können gegebenenfalls Betonzusatzmittel wie z.B. Spritzbetonbeschleuniger zugegeben werden. Nassspritzverfahren können nach der Dünn-Strom-Methode oder der Dicht-Strom-Methode durchgeführt werden.

Spritzverfahren werden z.B. verwendet, wenn keine Verschalung möglich ist oder für die Bereitstellung von Auskleidungen und verstärkenden Schichten bei der Herstellung von Tiefbau-Konstruktionen oder wenn Hohlräume mit einer verstärkenden Schicht versehen werden müssen, z.B. in Tunneln, Galerien und Röhren, z.B. im Bergbau. Weiterhin kann das Spritzverfahren für die Verfestigung oder Stabilisierung oder Verdichtung von natürlichen Böden, wie Felsen, Abhängen oder Ausschachtungen, Baugrund und Untergrund dienen.

Gemäß dem erfindungsgemäßen Verfahren wird ein Spritzbetonbeschleuniger aus einer Mischung a), b) oder c) hergestellt. Das Verfahren zur Herstellung der jeweiligen Mischung a), b) oder c), die den Spritzbetonbeschleuniger darstellt, wird nachstehend ausführlich erläutert.

Der Spritzbetonbeschleuniger aus der Mischung a), b) oder c) kann als fester Spritzbetonbeschleuniger, d.h. als Feststoffmischung, vorzugsweise als Pulver vorliegen. Es ist aber bevorzugt, dass der nach dem erfindungsgemäßen Verfahren hergestellte Spritzbetonbeschleuniger aus der Mischung a), b) oder c) eine wässrige Mischung, insbesondere eine wässrige Lösung oder eine wässrige Suspension ist. Eine wässrige Suspension ist eine Dispersion von Feststoffteilchen in einer flüssigen Phase.

Ein fester Spritzbetonbeschleuniger kann ohne weiteres durch Zugabe von Wasser in eine wässrige Mischung, insbesondere eine wässrige Lösung oder Suspension des Spritzbetonbeschleunigers überführt werden. Es kann z.B. zweckmäßig sein, den Spritzbetonbeschleuniger in fester Form zum Einsatzort zu transportieren, um Volumen einzusparen, und ihn erst vor Ort in eine wässrige Lösung oder Suspension zu überführen, die dann als Spritzbetonbeschleuniger verwendet werden kann.

Der nach dem erfindungsgemäßen Verfahren hergestellte Spritzbetonbeschleuniger aus der Mischung a), b) oder c) kann für das Trockenspritzverfahren oder für das Nassspritzverfahren verwendet werden. Der Einsatz des Spritzbetonbeschleunigers in Form einer wässrigen Mischung, insbesondere einer wässrigen Lösung oder Suspension, ist bevorzugt.

Der Spritzbetonbeschleuniger gemäß Mischung a), b) oder c), der als wässrige Mischung, insbesondere als wässrige Lösung oder Suspension vorliegt, weist einen pH-Wert von unter 4 auf, z.B. einen pH im Bereich von 2 bis unter 4. Sofern es sich um einen festen Spritzbetonbeschleuniger handelt, weist eine Mischung des festen Spritzbetonbeschleunigers in Wasser ebenfalls einen pH-Wert von unter 4 auf z.B. einen pH im Bereich von 2 bis unter 4. Die Mischung des festen Spritzbetonbeschleunigers in Wasser kann z.B. erhalten werden, indem man 100 g des festen Spritzbetonbeschleunigers in 100 g Wasser löst oder suspendiert. Es kann einige Minuten oder Stunden dauern, bis sich ein Gleichgewicht und ein stabiler pH-Wert eingestellt haben. Die hier angegebenen pH-Werte beziehen sich alle wie üblich auf den pH-Wert der wässrigen Mischung im Gleichgewichtszustand.

Bei Zugabe von Wasser zur trockenen Mischung finden Lösungsvorgänge und andere Reaktionen statt, die z.B. zur Fällung fester Substanzen führen können. Je nach eingesetzten Rohstoffen kann es einige Minuten oder Stunden dauern, bis die Mischung abreagiert ist und sich das Gleichgewicht eingestellt hat. Im Verlauf der Abreaktion kann sich der pH-Wert verändern, so dass sich ein zeitlich konstanter pH-Wert erst nach Abreaktion einstellt. Die Gleichgewichtseinstellung lässt sich somit auch leicht dadurch feststellen, dass sich der pH-Wert im Wesentlichen nicht mehr ändert. Der pH-Wert wird bei Raumtemperatur (20°C) bestimmt.

Die wässrige Mischung der Mischung a), b) oder c), insbesondere als wässrige Lösung oder wässrige Suspension, kann z.B. einen Wassergehalt im Bereich von 20 bis 90 Gew.-%, insbesondere von 40 bis 80 Gew.-%, bevorzugt von 50 bis 70 Gew.-% und besonders bevorzugt von 60 bis 65 Gew.-% aufweisen. Der vorstehende Wassergehalt bezieht sich auf den Gesamtwassergehalt, d.h. einschließlich gegebenenfalls vorhandenen Kristallwassers. Einige Ausgangsstoffe, insbesondere Aluminiumsulfat, können Wasser, insbesondere in Form von Kristallwasser enthalten. Das Kristallwasser kann in einigen technischen Produkten sogar bis nahezu 50 Gew.-% des Gesamtgewichts ausmachen, was zu berücksichtigen ist. Der Feststoffgehalt ohne Kristallwasser des Spritzbetonbeschleunigers aus der Mischung a), b) oder c) beträgt besonders bevorzugt 30 bis 45 Gew.-% und insbesondere 35 bis 40 Gew.-%.

Es ist bevorzugt, das ein Spritzbetonbeschleuniger aus der Mischung a), b) und/oder c) frei von Chlorid oder im Wesentlichen frei von Chlorid ist, z.B. mit einem Chloridgehalt von nicht mehr als 0,1 Gew.-%, bezogen auf die Mischung a), b) und/oder c). Es ist ferner bevorzugt, dass der Spritzbetonbeschleuniger aus der Mischung a), b) und/oder c) frei von Alkali oder im Wesentlichen frei von Alkali ist, z.B. mit einem Alkaligehalt von nicht mehr als 1 Massen-% $Na_2O$-Äquivalent, bezogen auf die Mischung a), b) oder c). Es sind aber auch höhere Chlorid- und/oder Alkaligehalte möglich. Das $Na_2O$-Äquivalent wird weiter unten erläutert.

Ein Spritzbetonbeschleuniger aus der Mischung a), b) oder c) ist vorzugsweise eine wässrige Suspension, wobei die wässrige Suspension besonders bevorzugt Jurbanit enthält. Jurbanit ist $Al(SO_4)(OH) \cdot 5H_2O$ und liegt in der Suspension als Feststoff vor.

In den Mischungen a), b) oder c) liegt das molare Verhältnis von Aluminium zu (Sulfat - Calcium), d.h. $mol_{Al}/(mol_{SO4} - mol_{Ca})$, z.B. im Bereich von 0,66 bis 2,2 oder 2/3 bis 2,2, insbesondere größer 2/3, bevorzugt 0,67 bis 1,9, bevorzugter im Bereich von 0,68 bis 1,6, bevorzugter im Bereich von 0,69 bis 1,3, bevorzugter im Bereich von 0,7 bis 1, bevorzugter im Bereich von 0,71 bis 0,9 und besonders bevorzugt im Bereich von 0,72 bis 0,8, wobei in den Mischungen b) und c) die Menge an Ca, wenn überhaupt vorhanden, gewöhnlich nur vernachlässigbar gering ist, z.B.

in Spuren oder als Verunreinigung, so dass dort das obige molare Verhältnis oft im Wesentlichen dem molaren Verhältnis von Aluminium zu Sulfat, $mol_{Al}/mol_{SO4}$, entspricht. In einer Mischung a) ist zu berücksichtigen, dass das Sulfat teilweise als Calciumsulfat gebunden wird, wenn Wasser vorhanden ist. In wässriger Lösung fällt $CaSO_4 2H_2O$ ("Gips") aus. Die wässrigen Spritzbetonbeschleuniger aus den Mischungen a), b) oder c) enthalten bevorzugt Aluminiumhydroxysulfat in Lösung oder gefällt als Suspension, wobei das molare Verhältnis von Aluminium zu (Sulfat -Calcium) gemäß vorstehender Definition bevorzugt größer 2/3 und besonders bevorzugt größer 2/3 und nicht mehr als 1 ist.

Für das molare Verhältnis werden das gesamte Aluminium, Sulfat und Calcium in der Mischung berücksichtigt, egal in welcher Form sie vorliegen, z.B. in Lösung und/oder in gebundener Form als Feststoff. Calcium wird berücksichtigt, da Sulfat welches als schwerlösliches Calciumsulfat, gewöhnlich Gips, gebunden ist, für die Reaktion, durch die der Spritzbeton abgebunden wird, nicht zur Verfügung steht. Dieses Abbinden dauert in der Regel nur einige Minuten. Bei der anschließenden Aushärtung des Spritzbetons, die Stunden oder eventuell Tage dauern kann, stört der Gips nicht und kann sogar nützlich sein. In der Regel löst er sich dabei auf und wird in die Hydratphasen des Zements eingebaut.

Bei einer wässrigen Mischung a) kann in der Regel davon ausgegangen werden, dass, abgesehen von einer geringen Konzentration an Calciumionen in der Mischung unterhalb der Löslichkeitsgrenze von Calciumsulfat, der restliche Gehalt an Calcium aus der Calciumverbindung in Calciumsulfat überführt wird. Die Menge an Ca-Ionen, die aufgrund der Löslichkeitsgrenze von $CaSO_4$ in Lösung ist, ist wegen der relativen Schwerlöslichkeit von Calciumsulfat (Löslichkeitsprodukt bei 25°C gemäß R.C. Weast (Hrsg.), Handbook of Chemistry and Physics, 56. Auflage, CRC Press, Cleveland USA 1975: $2,45 \cdot 10^{-5} mol^2 l^{-2}$) sehr gering.

Die Mengen an Calcium, Aluminium und Sulfat und das entsprechende molare Verhältnis $mol_{Al}/(mol_{SO4} - mol_{Ca})$, in den Mischungen a), b) oder c) können leicht aus den eingesetzten Mengen der Ausgangsverbindungen anhand ihrer Zusammensetzung ermittelt bzw. berechnet werden. Sofern erforderlich, kann gegebenenfalls der Gehalt der relevanten Elemente bzw. Ionen in den Ausgangskomponenten und/oder in der Mischung auch mittels bewährter Analysemethoden quantitativ bestimmt werden, wobei hier insbesondere ICP-OES (optische Emissionsspektroskopie mittels induktiv gekoppeltem Plasma) zu erwähnen ist. In der Regel ist Schwefel nur in Form von Sulfat enthalten, so dass aus der durch die Analyse ermittelten Menge an Schwefel auch direkt die Menge an Sulfat ermittelt werden kann. Sofern Schwefel auch in einer anderen Form als Sulfat vorhanden ist, was allerdings üblicherweise nicht der Fall ist, ist dies bei der Bestimmung des Sulfatgehalts gesondert zu berücksichtigen. Weitere Beispiele für übliche Analysemethoden, die gegebenenfalls eingesetzt werden können, sind z.B. Ionenchromatographie oder Elektrophorese für gelöste Ionen oder z.B. XRD (Röntgenbeugung) für kristalline Phasen.

Das Verfahren zur Herstellung der Mischung a) als Spritzbetonbeschleuniger umfasst das Mischen von mindestens einer Aluminiumverbindung ausgewählt aus einem Aluminiumsulfat und/oder einem Aluminiumhydroxysulfat, mindestens einer Calciumverbindung und gegebenenfalls Wasser. Bei der Aluminiumverbindung handelt es sich um ein Aluminiumsulfat und/oder ein Aluminiumhydroxysulfat, wobei ein Aluminiumsulfat bevorzugt ist. Es kann nur Aluminiumsulfat, nur Aluminiumhydroxysulfat oder Aluminiumsulfat und Aluminiumhydroxysulfat eingesetzt werden.

Als Aluminiumsulfat können alle üblichen Produkte eingesetzt werden, einschließlich technischen Aluminiumsulfats. Diese sind im Handel erhältlich. Es können wasserfreies Aluminiumsulfat, Aluminiumsulfathydrate oder Mischungen davon eingesetzt werden. In der Praxis werden Aluminiumsulfate mit unterschiedlichem Hydrat- bzw. Wassergehalt vertrieben, die für die vorliegende Erfindung geeignet sind. In der Regel sind Aluminiumsulfathydrate bevorzugt, da sie eine bessere Löslichkeit aufweisen. Technisches Aluminiumsulfat kann gegebenenfalls einen erhöhten Gehalt an Sulfat aufweisen, so dass das Verhältnis von Al/SO4 kleiner 2/3 ist. Dies kann sich z.B. dadurch ergeben, dass technisches Aluminiumsulfat häufig einen kleinen Überschuss (z.B. < 1%, meist nicht mehr als 0,3%) an Schwefelsäure enthält. Möglich ist auch eine zusätzliche Zugabe von Sulfatverbindungen wie Natriumsulfat oder weiterer Schwefelsäure z.B. in Mengen von bis zu 5 Gew.-% oder mehr, dies ist in der Regel aber nicht bevorzugt.

Geeignete Aluminiumhydroxysulfate sind stöchiometrische und nichtstöchiometrische Aluminiumhydroxysulfate, die jeweils wasserfrei oder als Hydrat vorliegen können. In den Aluminiumhydroxysulfaten ist ein Teil der Sulfationen in Aluminiumsulfat durch Hydroxygruppen ersetzt. Aluminiumhydroxysulfate werden oft auch als basisches Aluminiumsulfat bezeichnet. Stöchiometrisches Aluminiumhydroxysulfat, $Al(OH)(SO_4)$, das gegebenenfalls Hydratwasser aufweist, wird auch als Aluminiumhydroxidsulfat bezeichnet. Im stöchiometrischen Aluminiumhydroxysulfat ist das molare Verhältnis von $Al/SO_4$ gleich 1. Ein Beispiel hierfür ist Jurbanit. Nichtstöchiometrische Aluminiumhydroxysulfate weisen einen geringeren Gehalt an Hydroxid auf als das stöchiometrische Aluminiumhydroxysulfat. Für den Ladungsausgleich ist der Sulfatgehalt entsprechend erhöht. Dementsprechend ist das molare Verhältnis von $Al/SO_4$ in nicht-stöchiometrischen Aluminiumhydroxysulfaten kleiner 1 und größer als 2/3. Als nicht-stöchiometrisches Aluminiumhydroxysulfat kann z.B. das aus dem erfindungsgemäßen Verfahren aus Mischung c) erhaltene basische Aluminiumsulfat verwendet werden.

Als stöchiometrische oder nicht-stöchiometrische Aluminiumhydroxysulfate können wasserfreie Aluminiumhydroxysulfate, Aluminiumhydroxysulfathydrate oder Mischungen davon eingesetzt werden.

Als Calciumverbindung können eine oder mehrere übliche Calciumverbindungen verwendet werden. Es kann sich um anorganische oder organische Calciumverbindungen handeln, wobei anorganische Calciumverbindungen be-

EP 3 636 623 A1

vorzugt sind. Ohne sich an eine Theorie binden zu wollen, dient die Calciumverbindung gewöhnlich als Quelle von Calciumionen zum Abfangen von Sulfat in der Mischung unter Bildung von schwerlöslichem Calciumsulfat.

Bei der eingesetzten Calciumverbindung kann es sich um eine zumindest im sauren pH-Bereich ganz oder teilweise wasserlösliche künstliche oder natürliche (z. B. Mineral) Verbindung handeln.

In einer bevorzugten Variante wird die Calciumverbindung in einer solchen Menge eingesetzt, dass die Calciumkonzentration im Beschleuniger nur knapp über oder sogar unter der Löslichkeitsgrenze von Gips liegt. Ohne sich an eine Theorie binden zu wollen, wird vermutet, dass Mischungen von Beton und solchen Beschleunigern bezüglich Ca von Anfang an gesättigt sind und deshalb schneller abbinden.

Überraschenderweise wurde festgestellt, dass auch geringe, sich noch in Lösung befindliche Mengen Ca-Ionen oder Ca-haltige Kristallkeime wirksam sind und auch die Lagerstabilität verbessern. Daher kann die Calciumverbindung auch in geringen Mengen unterhalb der Löslichkeitsgrenze von Gips in der Mischung zugegeben werden. In diesem Fall fällt kein Gips aus und das molare Verhältnis von Al zu Sulfat in der Lösung bleibt unverändert.

Bei der mindestens einen Calciumverbindung handelt es sich bevorzugt um eine Calciumverbindung, die bei einem pH < 7, d.h. im sauren Bereich, in Wasser löslich ist, was auch eine Reaktion beinhalten kann. Calciumsulfat ist daher z.B. nicht bevorzugt.

Beispiele für bevorzugte Calciumverbindungen sind Calciumoxid, Calciumhydroxid, Calciumcarbonat, Zement, insbesondere Portlandzement, und Mischungen davon. Des weiteren sind Calciumhalogenide wie Calciumchlorid und Calciumnitrat ebenfalls geeignet, aber nicht bevorzugt, da Halogenide wie Chlorid oder Nitrat in zu großen Konzentrationen bestimmte Eigenschaften des Betons oder Mörtels negativ beeinflussen können und deren Gehalt in den meisten Ländern für viele Anwendungen beschränkt ist. Insbesondere der Einsatz von Calciumnitrat kann aber unter bestimmten Umständen durchaus zweckmäßig sein. Weitere Beispiele für geeignete Calciumverbindungen sind Calciumformiat und Calciumacetat. In einer Ausführungsform kann als Calciumverbindung eine Mischung von einer basischen Calciumverbindung und Calciumcarbonat eingesetzt werden. Beispiele für basische Calciumverbindungen sind Calciumoxid, Calciumhydroxid oder Zement.

Bevorzugte Beispiele für den Zement sind z. B. ein Zement gemäss Norm EN 197 CEM I, CEM II, CEM III, CEM IV oder CEM V, oder gemäss Norm ASTM C150 Type I, Type II, Type III, Type IV oder Type V.

Es ist im Allgemeinen bevorzugt, dass die zugesetzte Calciumverbindung im Wesentlichen vollständig unter Bildung von Calciumsulfat abreagiert. In einigen Fällen kann es aber auch vorteilhaft sein, dass die Calciumverbindung nicht vollständig reagiert und Reste oder inerte Anteile verbleiben.

Durch die Zugabe der Calciumverbindung zu einem Aluminiumsulfat und/oder einem Aluminiumhydroxysulfat in wässriger Mischung kann durch Ausfällen von Calciumsulfat (Gips) ein Teil des vorhandenen Sulfats gebunden und so das Verhältnis von Aluminium zu leicht zugänglichem Sulfat im Beschleuniger erhöht werden. Bei der Reaktion von einem Aluminiumsulfat und/oder einem Aluminiumhydroxysulfat mit Calciumcarbonat wird ferner Kohlendioxid freigesetzt. Durch die Zugabe von Zement, insbesondere Portlandzement, wird nicht nur Gips abgeschieden, sondern der Mischung wird auch in dem Zement enthaltenes Aluminium zugesetzt. Auch andere im Zement enthaltene Substanzen wie Eisen oder Silikat können nützlich sein.

Der Mischung kann gegebenenfalls Wasser zugegeben werden. Die Zugabe von Wasser ist besonders bevorzugt. Es kann Wasser allein oder Wasser, das ein oder mehrere Additive enthält, verwendet werden. Beispiele für geeignete Additive sind die nachstehend genannten. In dem Wasser kann z.B. mindestens ein Stabilisator, insbesondere ein Stabilisator für die Lagerstabilität, enthalten sein. Es kann sich um einen löslichen Stabilisator, wie Phosphorsäure, oder bevorzugt um einen unlöslichen Stabilisator, wie z.B. Sepiolit oder Bentonit, handeln.

Der Mischung können ferner nach Bedarf ein oder mehrere Additive zugesetzt werden. Es kann sich um übliche Additive handeln, die in Spritzbetonbeschleuniger eingesetzt werden. Beispiele für solche Additive sind eine oder mehrere Aluminiumverbindungen, insbesondere sulfatfreie oder sulfatarme Aluminiumverbindungen, um den Aluminiumgehalt weiter zu erhöhen, ein oder mehrere Dispergiermittel, ein oder mehrere Additive, die das Abbindeverhalten verbessern, und/oder ein oder mehrere Stabilisatoren. Beispiele für Stabilisatoren sind vorstehend angegeben. Beispiele für bevorzugt eingesetzte Additive, die in geeigneter Menge das Abbindeverhalten verbessern, sind $Mg^{2+}$-Verbindungen oder Magnesiumsalze, wie Magnesiumoxid, - hydroxid oder -carbonat, Diethanolamin (DEA) und Fluorverbindungen wie Flusssäure, Alkalifluoride und Fluorokomplexe. Sie können im Beschleuniger das Abbinden und teilweise auch die Lagerstabilität verbessern.

Ferner kann der Mischung a) auch mindestens ein Alkalialuminat als Additiv zugegeben werden. Als Beispiele für geeignete Alkalialuminate wird auf die nachstehend für Mischung b) genannten Beispiele verwiesen. Bei dem Alkalialuminat handelt es sich bevorzugt um ein Natriumaluminat, ein Kaliumaluminat oder eine Mischung davon. Wenn mindestens ein Alkalialuminat zugegeben wird, beträgt der Alkaligehalt der Mischung a) z.B. nicht mehr als 10 Massen-%, bevorzugt nicht mehr als 5 Massen-%, bevorzugt nicht mehr als 2 Massen-%, bevorzugter nicht mehr als 1 Massen-% $Na_2O$-Äquivalent. Diese bevorzugten Bereiche für den Alkaligehalt gelten im Übrigen auch, wenn der Mischung a) kein Alkalialuminat zugegeben wird.

Beispiele für sulfatfreie oder sulfatarme Aluminiumverbindungen sind amorphe Aluminiumhydroxide, Aluminiumnitrat oder Aluminiumhydroxycarbonate. Beispiele für Dispergiermittel sind Polyacrylsäure, Polyacrylate, Derivate von Phosphonsäuren und Mischungen, enthaltend zwei oder mehr der genannten Komponenten.

Das Verhältnis von Aluminiumsulfat und/oder Aluminiumhydroxysulfat und der mindestens einen Calciumverbindung kann in weiten Bereichen variieren. Es ist bevorzugt, dass in der Mischung a) das molare Verhältnis Ca : Al im Bereich von 0,002 bis 2, bevorzugt von 0,01 bis 1, besonders bevorzugt von 0,05 bis 0,5 liegt.

Zur Herstellung der Mischung a) können z.B., bezogen auf das Gesamtgewicht der Ausgangskomponenten einschließlich gegebenenfalls darin enthaltenen Kristallwassers aber ohne gegebenenfalls zugegebenem flüssigem Wasser, 50 bis 99,95 Gew.-% und bevorzugt 80 bis 99,5 Gew.-% Aluminiumsulfat und/oder Aluminiumhydroxysulfat und 0,05 bis 50 Gew.-%, bevorzugt 0,2 bis 20 Gew.-%, bevorzugter 0,5 bis 10 Gew.-%, und besonders bevorzugt 1 bis 5 Gew.-% mindestens einer Calciumverbindung zugesetzt werden, wobei gegebenenfalls auch ein oder mehrere Additive zugesetzt werden können, z.B. in einem Anteil von 0 bis 50 Gew.-%, bevorzugt 0,01 bis 20 Gew.-%, bevorzugter von 0,5 bis 10 Gew.-%.

Die Mischung a) kann als Feststoff, insbesondere als Pulver, oder bevorzugt als wässrige Mischung, insbesondere als wässrige Lösung oder wässrige Suspension, vorliegen. Der Wassergehalt der wässrigen Mischung a) kann z.B. im Bereich von 20 bis 90 Gew.-%, insbesondere 40 bis 80 Gew.-%, bevorzugt von 50 bis 70 Gew.-% und besonders bevorzugt 60 bis 65 Gew.-% liegen. Der vorstehende Wassergehalt bezieht sich auf den Gesamtwassergehalt, d.h. einschließlich gegebenenfalls vorhandenen Kristallwassers.

Die Reihenfolge der Zugabe der einzelnen Komponenten zur Mischung ist beliebig. Zur Herstellung einer trockenen Mischung können die Ausgangskomponenten einfach in trockener Form vermischt werden und gegebenenfalls weitere Additive zugesetzt werden. In einer bevorzugten Ausführungsform wird das Aluminiumsulfat und/oder Aluminiumhydroxysulfat in Wasser gelöst und/oder suspendiert und die mindestens eine Calciumverbindung anschließend in fester Form zugegeben und verrührt. Diese Ausführungsform kann allerdings bei basischen Calciumverbindungen gegebenenfalls zu einer Klumpenbildung führen. Um dies zu vermeiden, kann man beim Einsatz von basischen Calciumverbindungen wie z.B. Ca(OH)$_2$ oder Zement, wie Tonerdezement, dieses basische Pulver mit Kalk (CaCO$_3$) mischen. Bei Auflösung dieser Mischung entsteht Gas (CO$_2$), welches der Klumpenbildung entgegenwirkt.

In einer weiteren Ausführungsform wird die Calciumverbindung zuerst in Wasser gelöst und/oder suspendiert und anschließend Aluminiumsulfat und/oder Aluminiumhydroxysulfat als Pulver oder als wässrige Lösung oder Suspension beigegeben oder die in Wasser gelöste und/oder suspendierte Calciumverbindung wird zum Aluminiumsulfat und/oder Aluminiumhydroxysulfat als Pulver, Suspension oder Lösung gegeben.

In einer besonders bevorzugten Ausführungsform werden festes Aluminiumsulfat und/oder Aluminiumhydroxysulfat und die mindestens eine Calciumverbindung in fester Form vermischt und die erhaltene Feststoffmischung zu Wasser, das zweckmäßigerweise stark gerührt wird, zugegeben. Bei den bevorzugten Ausführungsformen können optionale Additive in beliebiger Weise zugesetzt werden, z.B. als gesonderte Komponente oder als Bestandteil des vorgelegten Wassers.

Die Mischung der Komponenten kann mit üblichen Misch- und/oder Rührvorrichtungen oder auch manuell mit geeigneten Misch- und/oder Rührmitteln für Trockenmischungen oder wässrige Mischungen erfolgen. Auf diese Weise kann eine homogene Mischung der Komponenten erhalten werden.

Bei der Mischung von Aluminiumsulfat und/oder Aluminiumhydroxysulfat und der mindestens einen Calciumverbindung in Wasser findet in der Regel eine exotherme Reaktion statt. Die Mischung kann gegebenenfalls erwärmt werden, das ist aber in der Regel nur dann erforderlich, wenn sonst die Auflösung oder Reaktion der Rohstoffe zu langsam ist. In der Regel brauchen die Komponenten nur kurz vermischt zu werden. Insbesondere wenn wie bevorzugt auch Wasser zur Mischung gegeben wird, kann das Mischen und gegebenenfalls Nachrühren z.B. über einen Zeitraum von 10 min bis 48 h, bevorzugt 10 min bis 24 h, oder 6 h bis 48 h erfolgen, um den fertigen Spritzbetonbeschleuniger zu erhalten.

Das in der Mischung gebildete Calciumsulfat kann zumindest zum Teil abgetrennt werden, z.B. durch Filtration. Es kann aber zweckmäßig sein, es in der Mischung zu belassen, da es gegebenenfalls eine zusätzliche Beschleunigung des Abbindens und Erhärtens des Betons oder Mörtels bewirken kann. Gegebenenfalls kann auch ein Teil oder die Gesamtmenge an zugegebenem Wasser wieder entfernt werden, z.B. durch Abdampfen, dies ist aber in der Regel nicht bevorzugt.

Das Verfahren zur Herstellung der Mischung b) als Spritzbetonbeschleuniger umfasst das Mischen von mindestens einer Aluminiumverbindung ausgewählt aus einem Aluminiumsulfat und/oder einem Aluminiumhydroxysulfat, mindestens einem Alkalialuminat und gegebenenfalls Wasser, wobei der Alkaligehalt der Mischung nicht mehr als 10 Massen-%, bevorzugt nicht mehr als 5 Massen-%, bevorzugter nicht mehr als 2 Massen-% und besonders bevorzugt nicht mehr als 1 Massen-% Na$_2$O-Äquivalent beträgt. Die Angabe bezieht sich auf das Gesamtgewicht der wässrigen oder trockenen Mischung.

Der Alkaligehalt wird wie in der Zementindustrie allgemein üblich als Na$_2$O-Äquivalent ausgedrückt, der nach folgender Formel berechnet wird (Angaben in Massen-%):

$$Na_2O\text{-Äquivalent} = Na_2O + 0{,}658 \cdot K_2O$$

Wie aus der Formel ersichtlich, bezieht sich der Alkaligehalt nur auf Na und K.

Als Aluminiumsulfat und/oder Aluminiumhydroxysulfat für die Aluminiumverbindung kommen alle üblichen Produkte in Betracht, die auch für die Mischung a) eingesetzt werden können. Es wird daher auf die obigen Angaben verwiesen.

Als Alkalialuminat können z.B. Lithiumaluminate, Natriumaluminate, Kaliumaluminate oder eine Mischung von zwei oder mehr davon eingesetzt werden, wobei Natriumaluminat und Kaliumaluminat und Mischungen davon bevorzugt sind und Natriumaluminat besonders bevorzugt ist, wobei die genannten Aluminate auch in Form ihrer Hydrate vorliegen können. Die Alkalialuminate sind im Handel erhältlich. Natriumaluminat ist ein großtechnisches Produkt. Die meisten kommerziellen Alkalialuminate mit oder ohne Hydratwasser sind nicht stöchiometrisch, beispielsweise werden Kaliumaluminate mit einer Stöchiometrie von $1{,}4\ K_2O + 1Al_2O_3$ vertrieben. Bei den Alkalialuminaten kann es sich daher neben den stöchiometrischen auch um nichtstöchiometrische Alkalialuminate handeln, wie sie im Handel üblich sind. Falls für die gewünschte Verfahrensführung geeignet, können mit Vorteil auch direkt die wässrigen Lösungen oder Suspensionen dieser Alkalialuminate eingesetzt werden, wie z.B. handelsübliche Natriumaluminat-Lösungen. Durch die Zugabe eines Alkalialuminats wird der Aluminiumgehalt der Mischung erhöht.

Der Mischung b) kann gegebenenfalls Wasser zugegeben werden. Die Zugabe von Wasser ist besonders bevorzugt. Es kann Wasser allein oder Wasser, das ein oder mehrere Additive enthält, verwendet werden. Beispiele für geeignete Additive sind die nachstehend genannten. In dem Wasser kann z.B. mindestens ein Stabilisator, insbesondere eine Stabilisator für die Lagerstabilität, enthalten sein. Es kann sich um einen löslichen Stabilisator, wie Phosphorsäure, oder bevorzugt um einen unlöslichen Stabilisator, wie z.B. Sepiolit oder Bentonit, handeln.

Der Mischung b) können ferner nach Bedarf ein oder mehrere Additive zugesetzt werden. Es kann sich um übliche Additive handeln, die in Spritzbetonbeschleuniger eingesetzt werden. Beispiele für solche Additive sind dieselben, die vorstehend für die Mischung a) genannt wurden, weswegen darauf verwiesen werden kann.

Das Verhältnis von Aluminiumsulfat und/oder Aluminiumhydroxysulfat und dem mindestens einen Alkalialuminat kann in weiten Bereichen variieren. Es ist bevorzugt, dass für die Mischung b) Aluminiumsulfat und/oder Aluminiumhydroxysulfat und das mindestens eine Alkalialuminat in einem Gewichtsverhältnis von dem mindestens einen Alkalialuminat, einschließlich gegebenenfalls vorhandenem Kristallwasser, zu dem Aluminiumsulfat und/oder Aluminiumhydroxysulfat, einschließlich gegebenenfalls vorhandenem Kristallwasser, im Bereich von 0,001 bis 1, bevorzugt von 0,005 bis 0,2 und besonders bevorzugt von 0,01 bis 0,1 gemischt werden.

Zur Herstellung der Mischung b) können z.B., bezogen auf das Gesamtgewicht der Ausgangskomponenten einschließlich gegebenenfalls darin enthaltenem Kristallwasser aber ohne gegebenenfalls zugegebenem flüssigem Wasser, von 50 bis 99,95 Gew.-%, bevorzugt von 80 bis 99,5 Gew.-% und bevorzugter 90 bis 99,5 Gew.-% Aluminiumsulfat und/oder Aluminiumhydroxysulfat und 0,05 bis 50 Gew.-%, bevorzugt von 0,2 bis 20 Gew.-% und bevorzugter von 0,5 bis 10 Gew.-% mindestens eines Alkalialuminats zugesetzt werden, wobei gegebenenfalls auch ein oder mehrere Additive zugesetzt werden können, z.B. in einem Anteil von 0 bis 50 Gew.-%, bevorzugt 0,01 bis 20 Gew.-%, bevorzugter von 0,5 bis 10 Gew.-%.

Die Mischung b) kann als Feststoff, insbesondere als Pulver, oder bevorzugt als wässrige Mischung, insbesondere als wässrige Lösung oder wässrige Suspension vorliegen. Der Wassergehalt der wässrigen Mischung b) kann z.B. im Bereich von 20 bis 90 Gew.-%, insbesondere 40 bis 80 Gew.-%, bevorzugt von 50 bis 70 Gew.-% und besonders bevorzugt von 60 bis 65 Gew.-% liegen. Der vorstehende Wassergehalt bezieht sich auf den Gesamtwassergehalt, d.h. einschließlich gegebenenfalls vorhandenen Kristallwassers. Sofern der Spritzbetonbeschleuniger aus der Mischung b) eine wässrige Mischung darstellt, weist er bevorzugt einen pH-Wert im Bereich von 2 bis unter 4 auf. Sofern es sich um einen festen Spritzbetonbeschleuniger aus der Mischung b) handelt, weist eine Mischung des festen Spritzbetonbeschleunigers in Wasser bevorzugt einen pH-Wert im Bereich von 2 bis unter 4 auf.

Die Reihenfolge der Zugabe der einzelnen Komponenten zur Mischung ist beliebig. Zur Herstellung einer trockenen Mischung können die Ausgangskomponenten in trockener Form vermischt werden und gegebenenfalls weitere Additive zugesetzt werden. In einer Ausführungsform wird das Aluminiumsulfat und/oder Aluminiumhydroxysulfat in Wasser gelöst und/oder suspendiert und das mindestens eine Alkalialuminat anschließend in fester Form zugegeben und verrührt oder umgekehrt das mindestens eine Alkalialuminat in Wasser gelöst und/oder suspendiert und anschließend Aluminiumsulfat und/oder Aluminiumhydroxysulfat in fester Form zugegeben und verrührt. Es ist natürlich auch möglich, wässrige Lösungen oder Suspensionen jeweils von Aluminiumsulfat und/oder Aluminiumhydroxysulfat und dem mindestens einen Alkalialuminat miteinander zu verrühren. In einer weiteren Ausführungsform werden festes Aluminiumsulfat und/oder Aluminiumhydroxysulfat und das mindestens eine Alkalialuminat in fester Form vermischt und zu der erhaltenen Feststoffmischung Wasser zugegeben und verrührt oder die erhaltene Feststoffmischung wird vorzugsweise in Wasser eingerührt. Bei den genannten Ausführungsformen können optionale Additive in beliebiger Weise zugesetzt werden, z.B. als gesonderte Komponente oder als Bestandteil des zugesetzten Wassers.

Die Mischung der Komponenten kann mit üblichen Misch- und/oder Rührvorrichtungen oder auch manuell mit geeigneten Misch- und/oder Rührmitteln für Trockenmischungen oder wässrige Mischungen erfolgen. Auf diese Weise kann eine homogene Mischung der Komponenten erhalten werden.

Bei der Mischung von Aluminiumsulfat und/oder Aluminiumhydroxysulfat und des mindestens einen Alkalialuminats in Wasser kann eine exotherme Reaktion stattfinden. Die Mischung kann gegebenenfalls erwärmt werden, das ist aber in der Regel nicht erforderlich. In der Regel brauchen die Komponenten nur kurz vermischt zu werden. Insbesondere wenn wie bevorzugt auch Wasser zur Mischung gegeben wird, kann das Mischen und gegebenenfalls Nachrühren z.B. über einen Zeitraum von 10 min bis 48 h, bevorzugt 10 min bis 24 h, oder 6 h bis 48 h erfolgen, um den fertigen Spritzbetonbeschleuniger zu erhalten. Gegebenenfalls kann auch ein Teil oder die Gesamtmenge an zugegebenem Wasser wieder entfernt werden, z.B. durch Abdampfen, dies ist aber in der Regel nicht bevorzugt.

Das Verfahren zur Herstellung der Mischung c) umfasst die Umsetzung von konzentrierter Schwefelsäure und Aluminiumhydroxid, bevorzugt kristallinem Aluminiumhydroxid, wobei die Schwefelsäure im stöchiometrischen Unterschuss vorliegt und die Mischung, bevorzugt unter Überdruck (> 1 bar), bei einer Temperatur von über 100 °C umgesetzt wird. Gegebenenfalls kann nach der Umsetzung Wasser zur Verdünnung zugegeben werden.

Die Schwefelsäure liegt im stöchiometrischen Unterschuss bzw. unterstöchiometrisch vor, wobei sich dies auf die Stöchiometrie der Umsetzung von Aluminiumhydroxid und Schwefelsäure zur Herstellung von Aluminiumsulfat gemäß folgender Reaktionsgleichung bezieht:

$$2Al(OH)_3 + 3H_2SO_4 \rightarrow Al_2(SO_4)_3 + 6H_2O$$

Dementsprechend liegt Schwefelsäure im stöchiometrischen Unterschuss vor, wenn das molare Verhältnis von $H_2SO_4$ zu $Al(OH)_3$ kleiner 1,5 ist. Bevorzugt ist bei der Herstellung der Mischung c) das molare Verhältnis von $H_2SO_4$ zu $Al(OH)_3$ kleiner als 1,48, bevorzugter nicht mehr als 1,45 und besonders bevorzugt nicht mehr als 1,4. Ferner ist bevorzugt, dass das molare Verhältnis von $H_2SO_4$ zu $Al(OH)_3$ mindestens 1 und bevorzugter mindestens 1,2 ist. Es ist bevorzugt, dass konzentrierte Schwefelsäure und Aluminiumhydroxid, bevorzugt kristallines Aluminiumhydroxid, in einem Molverhältnis von Schwefelsäure zu Aluminiumhydroxid, bevorzugt kristallinem Aluminiumhydroxid, in einem Bereich von 1,45 bis 1 bevorzugt von 1,45 bis 1,2 gemischt werden.

Als konzentrierte Schwefelsäure können alle handelsüblichen konzentrierten Schwefelsäuren eingesetzt werden. Wässrige Schwefelsäurelösungen werden durch ihren $H_2SO_4$-Gehalt in Massenprozent definiert. Zweckmäßigerweise wird eine konzentrierte Schwefelsäure mit einem Schwefelsäuregehalt von z.B. mindestens 50 Massen-% verwendet. Besonders geeignet sind z.B. Schwefelsäuren mit einem Schwefelsäuregehalt im Bereich von 60 bis 90 Massen-%.

Bei dem eingesetzten Aluminiumhydroxid handelt es sich bevorzugt um kristallines Aluminiumhydroxid. Das kristalline Aluminiumhydroxid kann gegebenenfalls Anteile an amorphem Aluminiumhydroxid enthalten, z.B. weniger als 10 Gew.-%, gewöhnlich weniger als 1 Gew.-%. Verschiedene Kristallmodifikationen von Aluminiumhydroxid sind geeignet. Kristallines Aluminiumhydroxid ist ein billiges Massenprodukt. Geeignet sind z.B. kristalline Aluminiumhydroxide, die beim Bayer-Prozess zum Aufschluss von Bauxiten anfallen. Bei dem kristallinen Aluminiumhydroxid kann es sich gegebenenfalls auch um Bauxit handeln. Natürliches Bauxit kann gegebenenfalls diverse Alumiumhydroxide enthalten. Beispiele sind Aluminiumorthohydroxid $Al(OH)_3$ wie $\gamma$-$Al(OH)_3$ (monoklin, bekannt als Mineral Gibbsit (Hydrargillit)), $\beta$-$Al(OH)_3$ (hexagonal, bekannt als Mineral Bayerit) und triklines Aluminiumorthohydroxid, bekannt als Mineral Nordstrandit, und wasserärmeres Aluminiummetahydroxid bzw. Aluminiumoxidhydroxid $AlO(OH)$ wie $\alpha$-$AlO(OH)$ (orthorhombisch, bekannt als Mineral Diaspor) oder $\gamma$-$AlO(OH)$ (orthorhombisch, bekannt als Mineral Böhmit). Weitere Modifikationen mit oder ohne Kristallwasser sind möglich. Kristallines Aluminiumhydroxid ist in Wasser unlöslich. Das kristalline Aluminiumhydroxid kann trocken oder in feuchter Form eingesetzt werden. Bei der Verwendung von feuchtem Aluminiumhydroxid muss das darin enthaltene Wasser berücksichtigt werden, um das gewünschte Molverhältnis von Aluminiumhydroxid zu Schwefelsäure sowie die für die Umsetzung nötige hohe Konzentration zu erhalten, d. h. die Schwefelsäure muss in entsprechend konzentrierterer Form und dafür geringerer Menge eingesetzt werden.

Die Umsetzung kann z.B. so durchgeführt werden, dass die konzentrierte Schwefelsäure im stöchiometrischen Unterschuss in einem Reaktor vorgelegt wird und das Aluminiumhydroxid, bevorzugt das kristalline Aluminiumhydroxid, trocken oder in feuchter Form zugegeben wird, wobei die Schwefelsäure vor der Zugabe vorgewärmt werden kann. Das Gemisch wird gerührt, wobei abhängig von der Wärme und der Konzentration der eingesetzten Schwefelsäure nach einer gewissen Zeit eine exotherme Reaktion startet, wodurch sich eine Schmelze der Reaktionsprodukte bilden kann.

Die Umsetzung kann ohne Überdruck durchgeführt werden, erfolgt aber bevorzugt unter Überdruck, d.h. bei einem Druck von über 1 bar, bevorzugter bei einem Druck von mindestens 3 bar. Die Umsetzung erfolgt z.B. bevorzugt bei einem Druck im Bereich von 3 bis 15 bar, bevorzugter von 5 bis 15 bar.

Die Umsetzung erfolgt bei einer erhöhten Temperatur von über 100 °C, bevorzugt mindestens 150 °C. Die Umsetzung kann z.B. bei einer Temperatur in einem Bereich von 120 bis 220 °C, bevorzugt von 160 bis 190 °C, durchgeführt werden.

Das Reaktionsgemisch wird in geeigneter Weise bei den genannten Temperaturen und Drücken über einen gewissen Zeitraum nach Zugabe der Schwefelsäure gerührt, z.B. über einen Zeitraum von mindestens 10 min, bevorzugt mindestens 15 min, wobei die Rührdauer z.B. 10 bis 60 min und bevorzugt 15 bis 30 min betragen kann.

Nach Beendigung der Reaktion kann das Reaktionsgemisch abgekühlt werden und gegebenenfalls vorhandenes Wasser durch Abdampfen, z.B. im Vakuum, oder durch Filtration entfernt werden, um ein festes Produkt zu erhalten. In der Regel erstarrt das Reaktionsgemisch aber vollständig beim Abkühlen. Nach Beendigung der Reaktion wird bevorzugt Wasser zugegeben. Gegebenenfalls können nicht umgesetzte Ausgangsprodukte abfiltriert werden.

Der Mischung c) können ferner nach Bedarf ein oder mehrere Additive zugesetzt werden. Es kann sich um übliche Additive handeln, die in Spritzbetonbeschleunigern eingesetzt werden. Beispiele für solche Additive sind dieselben, die vorstehend für die Mischung a) genannt wurden, weswegen darauf verwiesen werden kann.

Der Mischung c) können mindestens ein Additiv ausgewählt aus einer Calciumverbindung und einer Aluminiumverbindung und/oder ein oder mehrere andere Additive zugesetzt werden. Beispiele für geeignete Calciumverbindungen sind die für die Mischung a) genannten. Beispiele für geeignete Aluminiumverbindungen sind die vorstehend genannten sulfatfreien oder sulfatarmen Aluminiumverbindungen wie amorphe Aluminiumhydroxide, Aluminiumhydroxysulfate, Aluminiumnitrat oder Aluminiumhydroxycarbonate oder auch gegebenenfalls Alkalialuminate wie sie für die Mischung b) verwendet werden.

Die Additive, falls eingesetzt, werden der Mischung c) bevorzugt nach erfolgter Umsetzung der konzentrierter Schwefelsäure mit Aluminiumhydroxid, bevorzugt kristallinem Aluminiumhydroxid, zugesetzt.

Durch die Umsetzung wird ein basisches Aluminiumsulfat in fester Form, z.B. als Pulver, oder bevorzugt als wässrige Mischung, insbesondere als wässrige Lösung oder wässrige Suspension erhalten. Der Wassergehalt der Mischung c) kann z.B. im Bereich von 20 bis 90 Gew.-%, insbesondere 40 bis 80 Gew.-%, bevorzugt von 50 bis 70 Gew.-% und besonders bevorzugt von 60 bis 65 Gew.-% liegen. Der vorstehende Wassergehalt bezieht auf den Gesamtwassergehalt, d.h. einschließlich gegebenenfalls vorhandenen Kristallwassers. Sofern der Spritzbetonbeschleuniger aus der Mischung c) eine wässrige Mischung darstellt, weist er bevorzugt einen pH-Wert im Bereich von 2 bis unter 4 auf. Sofern es sich um einen festen Spritzbetonbeschleuniger aus der Mischung c) handelt, weist eine Mischung des festen Spritzbetonbeschleunigers in Wasser bevorzugt einen pH-Wert im Bereich von 2 bis unter 4 auf.

Wenn als Calciumverbindung Tonerdezement eingesetzt wird, ist die Herstellung der Mischung a) schwierig, da aufgrund der hohen Reaktivität von Tonerdezement die Mischung vor der Abreaktion häufig verklumpt. Diese Probleme können aber vermieden werden, wenn eine von zwei oder beide bereits vorstehend ausgeführten speziellen Verfahrensführungen gewählt werden, bei der die Ausgangskomponenten zuerst trocken vermischt und anschließend die Trockenmischung und Wasser gemischt werden.

Dabei können die Ausgangskomponenten zuerst trocken vermischt werden und anschließend wird die Trockenmischung zu Wasser gegeben. Die Trockenmischung wird dabei vorzugsweise allmählich in das Wasser eingerührt.

Alternativ kann Tonerdezement als basische Komponente (Pulver) allein oder ein Pulvergemisch, welches Tonerdezement enthält, vor der Zugabe zum Wasser oder der wässrigen Lösung mit Calciumcarbonat versetzt werden. Das in saurem Medium (pH 2 bis unter 4) freigesetzte $CO_2$-Gas wirkt der Verklumpung entgegen und kann die Verklumpung verhindern.

Dementsprechend betrifft die Erfindung auch ein Verfahren zur Herstellung eines Spritzbetonbeschleunigers, umfassend das Mischen von mindestens einer Aluminiumverbindung ausgewählt aus einem Aluminiumsulfat und einem Aluminiumhydroxysulfat und Tonerdezement und gegebenenfalls Calciumcarbonat in fester Form, um eine Feststoffmischung zu erhalten, und die Zugabe der Feststoffmischung zu Wasser, das gegebenenfalls gelöstes und/oder dispergiertes Calciumcarbonat enthält, um eine wässrige Mischung, insbesondere eine wässrige Lösung oder Suspension zu erhalten, wobei der Spritzbetonbeschleuniger einen pH-Wert von unter 4 aufweist.

Als Aluminiumsulfat und/oder Aluminiumhydroxysulfat kommen alle üblichen Produkte in Betracht, die auch für die Mischung a) eingesetzt werden können. Es wird daher auf die obigen Angaben verwiesen. Als Tonerdezement eignen sich alle in Handel erhältlichen Tonerdezemente. Alle vorstehend und nachstehend gemachten Angaben zur Mischung a) gelten gleichermaßen für dieses Verfahren, außer dass die in der Mischung a) eingesetzte mindestens eine Calciumverbindung durch Tonerdezement zu ersetzen ist und das obige Verfahren eingesetzt wird. Es wird daher auf diese Angaben verwiesen.

Die Erfindung betrifft auch die nach den vorstehend beschriebenen Verfahren erhältlichen Spritzbetonbeschleuniger aus einer Mischung a), b) oder c).

Die Erfindung betrifft auch die Verwendung einer Mischung a), b) oder c) als Beschleuniger für Spritzbeton oder Spritzmörtel bzw. als Spritzbetonbeschleuniger. Durch den Spritzbetonbeschleuniger kann das Abbinden und/oder Erhärten des Spritzbetons oder Spritzmörtels beschleunigt werden. Der Spritzbetonbeschleuniger ist dabei für die vorstehend beschriebenen Trockenspritzverfahren und Nassspritzverfahren geeignet, wobei er besonders bevorzugt im Nassspritzverfahren eingesetzt wird.

Der Spritzbetonbeschleuniger aus der Mischung a), b) oder c) kann als Pulver oder wässrige Mischung, insbesondere als wässrige Lösung oder Suspension, zum Spritzbeton oder Spritzmörtel zugesetzt werden, wobei der Spritzbetonbeschleuniger bevorzugt als wässrige Lösung oder Suspension eingesetzt wird, insbesondere beim Nassspritzverfahren. Wie vorstehend erwähnt, kann die wässrige Mischung auch erst am Einsatzort aus dem festen Spritzbetonbeschleuniger durch Zugabe von Wasser und gegebenenfalls weiteren Additiven, wie z. B. Diethanolamin, fertiggestellt werden. Kommerzielles DEA enthält meistens 10 - 20 % Wasser und kann so verwendet werden.

Beim Trockenspritzverfahren wird der erfindungsgemäße Spritzbetonbeschleuniger dem trockenen oder feuchten Spritzbeton oder Spritzmörtel vor oder gleichzeitig mit der Zugabe des Zugabewassers zugesetzt. Beim Nasssprizt-verfahren wird der erfindungsgemäße Spritzbetonbeschleuniger der nassen Grundmischung aus Beton oder Mörtel und Zugabewasser zugesetzt.

Der erfindungsgemäße Spritzbetonbeschleuniger kann der zu spritzenden Mischung, d.h. dem trockenen oder feuchten Spritzbeton oder -mörtel oder der nassen Grundmischung, in jeder Stufe des Spritzvorgangs zugegeben werden, z.B. in der Pumpe, die die Mischung transportiert, in der Linie, in der die Mischung transportiert wird, in der Vorbenetzungsdüse oder in der Spritzdüse oder zusammen mit der für das Spritzen verwendeten Luft oder zusammen mit dem Wasser, das bei der Durchführung eines Trockenspritzverfahrens in der Spritzdüse zugegeben wird. Der erfindungsgemäße Spritzbetonbeschleuniger wird bevorzugt in der Spritzdüse zugesetzt, insbesondere beim Nasssprizt-verfahren.

Die Zugabe des erfindungsgemäßen Spritzbetonbeschleunigers erfolgt vorzugsweise unter Verwendung einer Dosiereinheit, die für das Einbringen einer vorbestimmten Menge geeignet ist. Der erfindungsgemäße Spritzbetonbeschleuniger kann z.B. in einer Menge von 0,1 bis 15 Gew.-%, bevorzugt 2 bis 8 Gew.-%, bezogen auf die Menge an hydraulischem Bindemittel in der Zementsuspension, im Spritzbeton oder Spritzmörtel, zugegeben werden.

**Beispiele**

Es wurden Beschleuniger gemäß der folgenden Formulierung hergestellt:

| | |
|---|---|
| Aluminiumsulfat ($Al_2(SO_4)_3$ mit 17 % $Al_2O_3$) | 58 Gew.-% |
| Wasser | 39 Gew.-% |
| Sepiolith (Stabilisator) | 1 Gew.-% |
| Calciumverbindung | 2 Gew.-% |

Als einzusetzende Calciumverbindung eignen sich z.B.:

| | |
|---|---|
| Calciumoxid | z. B. CaO, gebrannter Kalk usw. |
| Calciumhydroxid | z. B. $Ca(OH)_2$, gelöschter Kalk usw. |
| Calciumcarbonat | z. B. $CaCO_3$, Kalkstein, Marmor, Dolomit usw. (in gemahlener Form) |
| Calciumnitrat | z. B. $Ca(NO_3)_2$, $Ca(NO_3)_2 \cdot 4H_2O$ usw. |
| Calciumchlorid | z. B. $CaCl_2 \cdot 2H_2O$, $CaCl_2 \cdot 4H_2O$, $CaCl_2 \cdot 6H_2O$ usw |
| Calciumformiat | z. B. $Ca(CHO_2)_2$, |
| Calciumacetat | z. B. $Ca(C_2H_3O_2)_2$, Calciumacetat Hydrat, usw. |

Dem Beschleuniger kann gegebenenfalls ferner mindestens ein Additiv, z.B. eines, welches vorstehend in der Beschreibung angeführt ist, zugesetzt werden, wobei dann in der Regel der Wassergehalt oder der Aluminiumsulfatgehalt entsprechend reduziert wird. Es kann z.B. zur oben genannten Mischung 1 Gew.-% an einem oder mehreren Additiven zugesetzt werden, wobei der Wassergehalt dementsprechend auf 38 Gew.-% reduziert wird.

**Patentansprüche**

1. Verfahren zur Herstellung eines Spritzbetonbeschleunigers aus einer Mischung b), umfassend das Mischen von
   b) mindestens einer Aluminiumverbindung ausgewählt aus einem Aluminiumsulfat und/oder einem Aluminiumhydroxysulfat, mindestens einem Alkalialuminat und gegebenenfalls Wasser,
   wobei der Alkaligehalt der Mischung nicht mehr als 5 Massen-% $Na_2O$-Äquivalent, bevorzugt nicht mehr als 2 Massen-% $Na_2O$-Äquivalent, beträgt,
   wobei das mindestens eine Alkalialuminat und Aluminiumsulfat und/oder Aluminiumhydroxysulfat in einem Gewichtsverhältnis von dem mindestens einen Alkalialuminat, einschließlich gegebenenfalls enthaltenem Kristallwasser, zu Aluminiumsulfat und/oder Aluminiumhydroxysulfat, einschließlich gegebenenfalls enthaltenem Kristallwasser, im Bereich von 0,001 bis 0,1 gemischt werden, und
wobei der Spritzbetonbeschleuniger oder, sofern es sich um einen festen Spritzbetonbeschleuniger handelt, eine Mischung des festen Spritzbetonbeschleunigers in Wasser, einen pH-Wert von unter 4 aufweist.

2. Verfahren nach Anspruch 1, wobei bei der Mischung b) das mindestens eine Alkalialuminat und Aluminiumsulfat und/oder Aluminiumhydroxysulfat in einem Gewichtsverhältnis von dem mindestens einen Alkalialuminat, einschließlich gegebenenfalls enthaltenem Kristallwasser, zu Aluminiumsulfat und/oder Aluminiumhydroxysulfat, einschließlich gegebenenfalls enthaltenem Kristallwasser, im Bereich von 0,005 bis 0,1 und besonders bevorzugt von 0,01 bis 0,1 gemischt werden.

3. Verfahren nach irgendeinem der Ansprüche 1 bis 2, wobei
bei der Mischung b) Aluminiumsulfat und/oder Aluminiumhydroxysulfat in Wasser gelöst und/oder suspendiert wird und anschließend das mindestens eine Alkalialuminat in fester Form zugegeben wird oder das mindestens eine Alkalialuminat in Wasser gelöst und/oder suspendiert wird und anschließend das Aluminiumsulfat und/oder Aluminiumhydroxysulfat in fester Form zugegeben wird oder
eine wässrige Lösung oder Suspension von Aluminiumsulfat und/oder Aluminiumhydroxysulfat und eine wässrige Lösung oder Suspension von mindestens einem Alkalialuminat miteinander gemischt werden oder die mindestens eine Aluminiumverbindung ausgewählt aus Aluminiumsulfat und Aluminiumhydroxysulfat und das mindestens eine Alkalialuminat in fester Form vermischt werden und die erhaltene Feststoffmischung zu Wasser gegeben wird oder
die mindestens eine Aluminiumverbindung ausgewählt aus Aluminiumsulfat und Aluminiumhydroxysulfat und das mindestens eine Alkalialuminat in fester Form vermischt werden und zu der erhaltenen Feststoffmischung Wasser zugegeben wird.

4. Verfahren nach einem der Ansprüche 1 bis 3, wobei in der Mischung b) zumindest ein Teil des zugegebenen Wassers wieder entfernt wird.

5. Verfahren nach irgendeinem der Ansprüche 1 bis 4, wobei der Spritzbetonbeschleuniger oder, sofern es sich um einen festen Spritzbetonbeschleuniger handelt, eine Mischung des festen Spritzbetonbeschleunigers in Wasser einen pH-Wert im Bereich von 2 bis unter 4 aufweist.

6. Verfahren nach irgendeinem der Ansprüche 1 bis 5, wobei der Spritzbetonbeschleuniger als Pulver, wässrige Lösung oder wässrige Suspension vorliegt, wobei eine wässrige Lösung oder Suspension bevorzugt ist.

7. Verfahren nach Anspruch 6, wobei der Spritzbetonbeschleuniger eine wässrige Suspension ist, die Jurbanit enthält.

8. Verfahren nach irgendeinem der Ansprüche 1 bis 7, wobei das molare Verhältnis von Aluminium zu (Sulfat - Calcium), $mol_{Al}/(mol_{SO4} - mol_{Ca})$, in der Mischung b) im Bereich von 0,66 bis 2,2 oder 2/3 bis 2,2, insbesondere größer 2/3, bevorzugt im Bereich von 0,67 bis 1,9, bevorzugter von 0,68 bis 1,6, noch mehr bevorzugt von 0,69 bis 1,3, noch mehr bevorzugt von 0,7 bis 1, noch mehr bevorzugt von 0,71 bis 0,9 und besonders bevorzugt im Bereich von 0,72 bis 0,8 liegt, wobei Ca gewöhnlich wenn überhaupt nur in Spuren oder als Verunreinigung vorhanden ist.

9. Verfahren nach irgendeinem der Ansprüche 1 bis 8, wobei zur Mischung b) ferner ein oder mehrere Additive zugesetzt werden.

10. Verfahren nach irgendeinem der Ansprüche 1 bis 9, wobei, bezogen auf das Gesamtgewicht der Ausgangskomponenten einschließlich gegebenenfalls darin enthaltenen Kristallwassers aber ohne gegebenenfalls zugegebenem Wasser, bei der Herstellung der Mischung b) 50 bis 99,95 Gew.-%, bevorzugt von 80 bis 99,5 Gew.-% Aluminiumsulfat und/oder Aluminiumhydroxysulfat und 0,05 bis 50 Gew.-%, bevorzugt von 0,2 bis 20 Gew.-% mindestens eines Alkalialuminats zugesetzt werden,
wobei der Mischung b) ferner ein oder mehrere Additive zugesetzt werden können.

11. Spritzbetonbeschleuniger aus einer Mischung b), erhältlich nach einem Verfahren gemäss irgendeinem der Ansprüche 1 bis 10.

12. Verwendung einer Mischung b) nach Anspruch 11 als Beschleuniger für Zementsuspensionen, Spritzbeton oder Spritzmörtel, insbesondere als Beschleuniger im Nassspritzverfahren.

**EP 3 636 623 A1**

Europäisches
Patentamt

European
Patent Office

Office européen
des brevets

# EUROPÄISCHER RECHERCHENBERICHT

Nummer der Anmeldung

EP 19 20 6783

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 423 133 B1 (TOUZET SYLVIE [FR] ET AL) 23. Juli 2002 (2002-07-23) * Beispiele 1,7 * | 1-12 | INV. C04B40/00 C01F7/74 |
| X | FR 2 800 061 A1 (RHODIA CHIMIE SA [FR]) 27. April 2001 (2001-04-27) * Beispiele 1-3 * | 1-12 | ADD. C04B103/12 |
| X | EP 1 972 603 A2 (IND QUIMICAS DEL EBRO S A [ES]) 24. September 2008 (2008-09-24) * Beispiele 1-3 * | 1-12 | |
| X | JP 2011 001203 A (DENKI KAGAKU KOGYO KK) 6. Januar 2011 (2011-01-06) * Zusammenfassung; Tabelle 2 * | 1-12 | |
| X | WO 2005/040059 A2 (MAPEI SPA [IT]; MALTESE CRISTIANO [IT] ET AL.) 6. Mai 2005 (2005-05-06) * Beispiel 1 * | 1-12 | |
| A | US 4 877 597 A (HAASE DIETER [CA] ET AL) 31. Oktober 1989 (1989-10-31) * Zusammenfassung * * Spalte 1, Zeile 10 - Spalte 5, Zeile 20 * | 1-12 | RECHERCHIERTE SACHGEBIETE (IPC) C04B C01F |
| A | SHIMATABI, H. ET AL: "Rapid setting agent for cement effective at low temperatures", CHEMICAL ABSTRACTS, Bd. 113, Nr. 14, 1. Oktober 1990 (1990-10-01), Seite 299, XP000190700, ISSN: 0009-2258 * Zusammenfassung * | 1-12 | |

-/--

Der vorliegende Recherchenbericht wurde für alle Patentansprüche erstellt

| Recherchenort | Abschlußdatum der Recherche | Prüfer |
|---|---|---|
| München | 6. März 2020 | Gattinger, Irene |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes
    Dokument

EPO FORM 1503 03.82 (P04C03)

Seite 1 von 2

Europäisches
Patentamt

European
Patent Office

Office européen
des brevets

**EUROPÄISCHER RECHERCHENBERICHT**

Nummer der Anmeldung

EP 19 20 6783

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | BAI, Y. ET AL: "Setting accelerators for high-strength shotcrete", CHEMICAL ABSTRACTS, CHEMICAL ABSTRACTS SERVICE (C A S), US, Bd. 117, Nr. 8, 24. August 1992 (1992-08-24), Seite 347, XP000375883, ISSN: 0009-2258 * Zusammenfassung * ----- | 1-12 | |
| A | JP 2007 031166 A (DENKI KAGAKU KOGYO KK) 8. Februar 2007 (2007-02-08) * Absatz [0040] * * Beispiel 2 * ----- | 1-12 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 6. März 2020 | Gattinger, Irene |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 19 20 6783

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-03-2020

| Im Recherchenbericht angeführtes Patentdokument | Datum der Veröffentlichung | Mitglied(er) der Patentfamilie | Datum der Veröffentlichung |
|---|---|---|---|
| US 6423133 B1 | 23-07-2002 | AU 9445998 A<br>CA 2305486 A1<br>EP 1019333 A1<br>FR 2769308 A1<br>JP 2001519309 A<br>US 6423133 B1<br>WO 9918045 A1<br>ZA 9808997 B | 27-04-1999<br>15-04-1999<br>19-07-2000<br>09-04-1999<br>23-10-2001<br>23-07-2002<br>15-04-1999<br>03-04-2000 |
| FR 2800061 A1 | 27-04-2001 | AU 7801600 A<br>FR 2800061 A1<br>WO 0130721 A1 | 08-05-2001<br>27-04-2001<br>03-05-2001 |
| EP 1972603 A2 | 24-09-2008 | EP 1972603 A2<br>ES 2308914 A1 | 24-09-2008<br>01-12-2008 |
| JP 2011001203 A | 06-01-2011 | KEINE | |
| WO 2005040059 A2 | 06-05-2005 | AT 461912 T<br>CN 1867524 A<br>EP 1680376 A2<br>WO 2005040059 A2 | 15-04-2010<br>22-11-2006<br>19-07-2006<br>06-05-2005 |
| US 4877597 A | 31-10-1989 | AU 615863 B2<br>BR 8905433 A<br>CA 2001063 A1<br>DE 68909736 D1<br>DE 68909736 T2<br>EP 0366388 A1<br>JP H02164714 A<br>NO 178492 B<br>US 4877597 A<br>ZA 8908027 B | 10-10-1991<br>30-04-1991<br>25-04-1990<br>11-11-1993<br>10-03-1994<br>02-05-1990<br>25-06-1990<br>02-01-1996<br>31-10-1989<br>27-03-1991 |
| JP 2007031166 A | 08-02-2007 | JP 5164315 B2<br>JP 2007031166 A | 21-03-2013<br>08-02-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Nicht-Patentliteratur**

- Handbook of Chemistry and Physics. CRC Press, 1975